# EUROPEAN PATENT SPECIFICATION

(11) **EP 4 279 808 B1**
(45) Date of publication and mention of the grant of the patent: **05.11.2025**
(21) Application number: 22174127.5
(22) Date of filing: 18.05.2022
(51) Int. Cl.: F23K 5/00, F16K 3/316

(54) **GAS-FLOW ADJUSTMENT DEVICE FOR A GAS BURNER APPLIANCE AND GAS BURNER APPLIANCE**
GASFLUSS-EINSTELLVORRICHTUNG FÜR EIN GASBRENNER-GERÄT UND GASBRENNER-GERÄT
DISPOSITIF DE RÉGLAGE DE DÉBIT DE GAZ POUR UN APPAREIL À BRÛLEUR À GAZ ET APPAREIL À BRÛLEUR À GAZ

(43) Date of publication of application: 22.11.2023
(60) Divisional application: 25205322.8
(73) Proprietor: Pittway Sarl, 1180 Rolle (CH)
(72) Inventor: Kralicek, Libor, 62700 Brno (CZ); Lisicky, Ondrej, 62700 Brno (CZ); Svojanovsky, Tomas, 62700 Brno (CZ)
(74) Representative: Sturm, Christoph

(56) References cited:
- EP-A1- 2 354 611
- EP-A1- 2 746 629
- WO-A1-2015/137837

## Description

The present disclosure relates to a gas-flow adjustment device for a gas burner appliance. Further on, the present disclosure relates to a gas burner appliance having a gas-flow adjustment device.

EP 2 667 097 A1 discloses a gas burner appliance having a gas-flow adjustment device and a method for operating such a gas burner appliance. During burner-on-phases of the gas burner appliance, a defined gas/air mixture having a defined mixing ratio of gas and air is provided to a burner chamber of the gas burner appliance for combusting the defined gas/air mixture. The defined gas/air mixture is provided by a mixing device mixing an air flow provided by an air duct with a gas-flow provided by a gas duct. The mixing device may be provided by a Venturi nozzle. The air flow flowing through the air duct is provided by fan in such a way that the fan speed of the fan depends on a desired burner-load of the gas burner appliance, wherein a fan speed range of the fan defines a so-called modulation range of the gas burner appliance. The defined mixing ratio of gas and air of the defined gas/air mixture is preferably kept constant over the entire modulation range of the gas burner appliance by a pneumatic controller of a gas control valve being positioned within the gas duct upstream of the gas-flow adjustment device. A gas safety valve is positioned upstream of the gas control valve. The pneumatic controller of the gas control valve uses a pressure difference between the gas pressure of the gas-flow in the gas duct and a reference pressure, wherein the pressure difference between the gas pressure of the gas-flow in the gas duct and the reference pressure is determined and controlled pneumatically. The combustion quality may be monitored on basis of a signal provided by a combustion quality sensor like a flame ionization sensor. According to EP 2 667 097 A1, during burner-on phases the defined mixing ratio of gas and air of the defined gas/air mixture may be calibrated to provide a desired combustion quality. The calibration may be performed on basis of the signal provided by the combustion quality sensor, namely by adjusting an opening position of the gas-flow adjustment device positioned within the gas duct on basis of the signal provided by the combustion quality sensor.

GB 2 242 257 A discloses gas safety valve for a gas burner. EP 1 613 881 B1 and EP 1 697 667 B1 both disclose a valve unit having a gas control valve and gas safety valve. EP 3 792 531 A1 discloses a gas-flow modulator.

Additional prior art is disclosed by WO 2015/137837 A1 and EP 2 746 629 A1, which form the basis for the two-part form of claim 1.

Against this background a novel gas-flow adjustment device for a gas burner appliance allowing a more accurate adjustment of the gas-flow through the gas-flow adjustment device is provided. Further on, a gas burner appliance having such a gas-flow adjustment device is provided.

A gas-flow adjustment device according to a first aspect of the invention is defined in the claim 1.

According to the invention, the moving element of throttle is made from plastics, wherein the moving element of the throttle and/or the actuator comprise at least one alignment feature being configured to provide an accurate relative position of the moving element relative to the static element. Such a gas-flow adjustment device allows a more accurate adjustment of the gas-flow through the gas-flow adjustment device while providing a simple and cost-effective design of the gas-flow adjustment device.

The moving element of the throttle comprises as alignment features flexible tongues, wherein a first flexible tongue is elastically deformable in a first direction running perpendicular to the linear moving direction of the moving element, wherein a second flexible tongue is elastically deformable in the first direction and in a second direction running perpendicular to the first direction and to the linear moving direction of the moving element, and wherein the first flexible tongue and the second flexible tongue both contact a respective surface of the housing and provide an alignment of the moving element relative to the static element when moving the moving element relative to the static element. The flexible tongues provide a clearance compensation and thereby allow a more accurate adjustment of the gas-flow through the gas-flow adjustment device.

In addition or alternatively, the moving element of the throttle comprises as alignment feature a flexible protrusion with a partial-thread, wherein the flexible protrusion of the moving element is elastically deformable in a direction running perpendicular to the linear moving direction of the moving element, and wherein the partial-thread of the flexible protrusion of the moving element engages the threaded spindle of the actuator and provides an alignment of the moving element relative to the static element when moving the moving element relative to the static element. The moving element may comprise as additional alignment features a first rigid protrusion with a partial-thread and a second rigid protrusion with a partial-thread, wherein the first and second rigid protrusions of the moving element engage the threaded spindle axially and radially offset from the flexible protrusion. The flexible protrusion and the rigid protrusions provide a clearance and hysteresis compensation and also allow a more accurate adjustment of the gas-flow through the gas-flow adjustment device.

The first flexible tongue and the second flexible tongue, the flexible protrusion, the first rigid protrusion and the second rigid protrusion may all be integrally formed providing one monolithic element made from plastics. An accurate adjustment of the gas-flow can be provided while also providing a simple and cost-effective design of the gas-flow adjustment device.

In addition or alternatively, the actuator comprises as alignment feature a flexible joint, wherein the flexible joint is configured to flexibly couple the threaded spindle at a first end of the same to the motor, wherein the flexible joint is further configured to provide an alignment of the threaded spindle relative to the moving element and thereby an accurate linear movement of the moving element relative to static element upon rotation of the threaded spindle by the motor. The flexible joint provides an eccentricity compensation and also allows a more accurate adjustment of the gas flow.

The actuator may comprise as additional alignment feature a rigid bearing element for the threaded spindle, wherein the rigid bearing element is configured to align the threaded spindle at a second end of the same opposite to the first end of the same at which the flexible joint is positioned. The rigid bearing element also allows a more accurate adjustment of the gas flow.

The moving element and the static element of the throttle may define a flow opening confined by side walls of the same, the side walls being arc shaped and being configured to define a gas-flow between a minimum amount of the gas-flow and a maximum amount of the gas-flow. Preferably, the moving element of the throttle comprises a circular opening configured to define the minimum amount of the gas-flow. Such a gas-flow adjustment device allows a more accurate adjustment of the gas-flow through the gas-flow adjustment device while providing a simple and cost-effective design of the gas-flow adjustment device.

The present application further provides a gas burner appliance having a gas-flow adjustment device according to the present invention. Preferred developments of the invention are provided by the dependent claims and the description which follows. Exemplary embodiments are explained in more detail on the basis of the drawing, in which:
- Figure 1: shows a schematic view of an exemplary gas burner appliance having a gas-flow adjustment device,

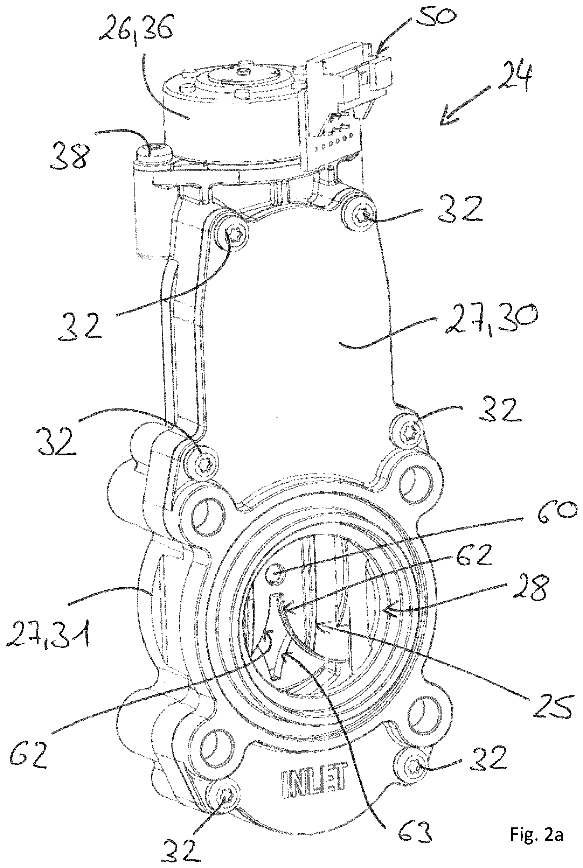

- Figure 2a: a first perspective view of gas-flow adjustment device,

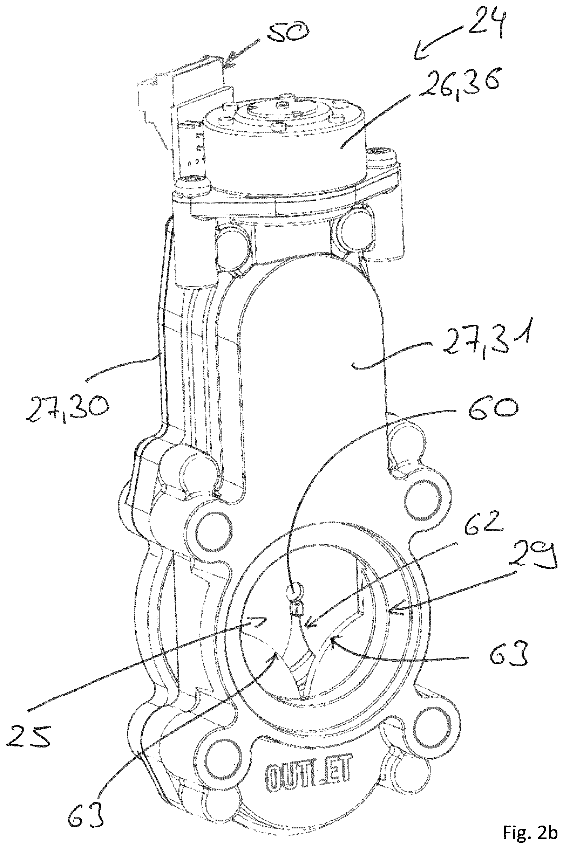

- Figure 2b: a second perspective view of gas-flow adjustment device,
- Figure 3: an exploded view of the gas-flow adjustment device,
- Figure 4: a cross section through the gas-flow adjustment device,
- Figure 5: a detail of Figure 4,
- Figure 6: a perspective view of a further detail of Figure 4,
- Figure 7a: a first perspective view of a moving element of a throttle of the gas-flow adjustment device,
- Figure 7b: a second perspective view of the moving element of Figure 7a,
- Figure 8: a perspective view of a further detail of the gas-flow adjustment device,
- Figure 9: a cross section of a further detail of the gas-flow adjustment device,
- Figure 10: a cross section of a further detail of the gas-flow adjustment device,
- Figure 11: a perspective view of the moving element of the throttle of the gas-flow adjustment device together with a threaded spindle of an actuator of the gas-flow adjustment device
- Figure 12: a first cross section of the detail of Figure 11,
- Figure 13: a second cross section of the detail of Figure 11,
- Figure 14: a perspective view of a further detail of the gas-flow adjustment device,
- Figure 15: a perspective view of a further detail of the gas-flow adjustment device,
- Figure 16: a cross section of an alternative for Figure 4,
- Figure 17: a cross section of a further alternative for Figure 4.

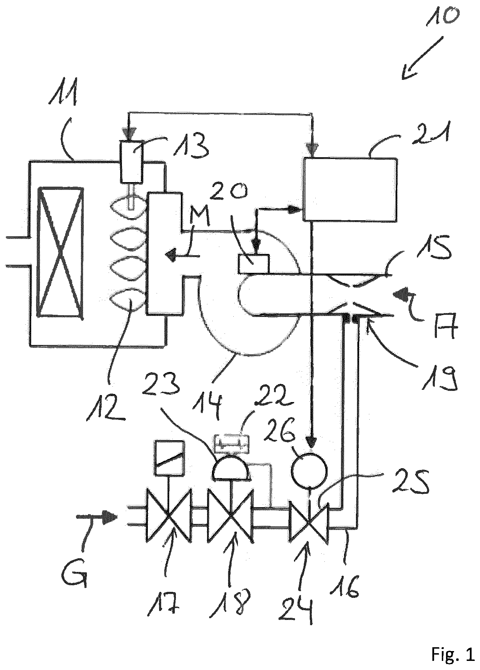

Figure 1 shows a schematic view of an exemplary gas burner appliance 10. The gas burner appliance 10 comprises a gas burner chamber 11 in which combustion of a defined gas/air mixture M having a defined mixing ratio of gas G and air A takes place during burner-on phases of the gas burner appliance 10. The combustion of the gas/air mixture M results into flames 12 and may be monitored by a combustion quality sensor, example given by a flame rod 13.

The defined gas/air mixture M is provided to the burner chamber 11 of the gas burner appliance 10 by mixing a flow of air A with a flow of gas G. A fan 14 sucks in air A flowing through an air duct 15 and gas G flowing through a gas duct 16. A gas safety valve 17 and a gas control valve 18 are assigned to the gas duct 16. The defined gas/air mixture M having the defined mixing ratio of gas G and air A is provided to the burner chamber 11 of the gas burner appliance 10.

The defined gas/air mixture M is provided by mixing the air flow provided by an air duct 15 with a gas-flow provided by a gas duct 16. The air flow and the gas-flow become preferably mixed by a mixing device 19. The mixing device 19 may be provided by a Venturi nozzle.

The quantity of the air flow and thereby the quantity of the gas/air mixture flow is controlled by the fan 14, namely by the speed of the fan 14. The fan speed can be varied by an actuator 20 of the fan 14 on basis of a desired burner-load. The fan speed of the fan 14 is controlled by a controller 21 of the gas burner appliance generating a control variable for the actuator 20 of the fan 14.

The defined mixing ratio of the defined gas/air mixture M is controlled by the gas control valve 18. In the shown exemplary gas burner appliance 10 the gas control valve 18 is controlled by a pneumatic controller 23. The pneumatic controller 23 of the gas control valve 18 controls the opening/closing position of the gas control valve 18.

The position of the gas control valve 18 is adjusted by the pneumatic controller 23 on basis of a pressure difference between the gas pressure of the gas-flow in the gas duct 16 and a reference pressure. The gas control valve 18 is controlled by the pneumatic controller 23 in such a way that at the outlet pressure of the gas valve 18 is equal to the reference pressure. In Figure 1, the ambient pressure serves as reference pressure. However, it is also possible to use the air pressure of the air flow in the air duct 15 as reference pressure.

The pressure difference between the gas pressure and the reference pressure is determined pneumatically by pneumatic sensor 22 of the pneumatic controller 23. The mixing ratio of the defined gas/air mixture M is controlled by the pneumatic controller 22 in such a way that over the entire modulation range of the gas burner appliance 10 the defined mixing ratio of gas G and air A of the gas/air mixture M is kept constant.

Alternatively, the constant mixing ratio of gas and air within the gas/air mixture may be controlled electrically or electronically on basis of a signal provided by an electrical or electronic pressure sensor or flow meter (not shown). In this case the electrical or electronic sensor may provide to the controller 21 an actual value corresponding to a pressure ratio between a gas pressure in a gas duct and an air pressure in an air duct or corresponding to a pressure ratio between the gas pressure in the gas duct and the air pressure at the reference point, wherein the controller 21 may compare said actual value with a nominal value. In this case, the controller 21 may generate a control variable for the gas control valve 18 on basis of the control deviation between the actual value and the nominal value, wherein the gas control valve 18 may be operated on basis of this control variable to keep over the entire modulation range of the gas burner appliance 10 the defined mixing ratio of gas G and air A in the gas/air mixture M constant.

A modulation of "1" means that the fan 14 is operated at maximum fan speed (100% of maximum fan speed) and thereby at a full-load of the gas burner appliance 10. A modulation of "2" means that the fan 14 is operated at 50% of the maximum fan speed and a modulation of "5" means that the fan 14 is operated at 20% of the maximum fan speed. By changing the fan speed of the fan 14, the burner-load of the gas burner appliance 10 can be adjusted. Over the entire modulation range of the gas burner appliance 10 the defined mixing ratio of gas and air within the defined gas/air mixture is kept constant.

As described above, the mixing ratio of the defined gas/air mixture M is controlled during burner-on phases so that over the entire modulation range of the gas burner appliance 10 the defined mixing ratio of the gas/air mixture M is kept constant. During burner-on phases the defined mixing ratio of gas G and air A of the defined gas/air mixture M may be calibrated. The calibration is performed by gas-flow adjustment device 24. The gas-flow adjustment device 24 comprises a throttle 25 and an actuator 26 assigned to the throttle 25. The controller 21 may control the actuator 26 and thereby the position of the throttle 25 during calibration. The gas-flow adjustment device 24 may also be called gas-flow calibration device 24.

The present disclosures provides a gas-flow adjustment device 24 allowing a more accurate adjustment of the gas-flow through the gas-flow adjustment device 24 while providing a simple and cost-effective design of the gas-flow adjustment device 24.

The gas-flow adjustment device 24 comprises a housing 27. The housing 27 provides an inlet 28 for a gas-flow and an outlet 29 for the gas-flow flowing through the gas-flow adjustment device 24. The housing 27 comprises a top housing part 30 providing the inlet 28 and a bottom housing part 31 providing the outlet 29. The top housing part 30 and the bottom housing part 31 are mounted together by screws 32. A sealing element 33 is positioned between the top housing part 30 and the bottom housing part 31. The top housing part 30 and the bottom housing part 31 define an interior space accommodating components of the gas-flow adjustment device 24.

The gas-flow adjustment device 24 comprises the throttle 25. The throttle 25 adjusts the amount of the gas-flow from the inlet 28 to the outlet 29 of the gas-flow adjustment device 24. The throttle 25 comprises a static element 34 and a moving element 35. The static element 34 of the throttle 25 may be integrally formed with the bottom housing part 31. The moving element 35 of the throttle 25 is a separate component and positioned inside the interior space of the housing 27. The moving element 35 of the throttle 25 is configured to move relative to static element 34 in a linear direction. The relative position of the moving element 35 relative to the static element 34 defines the amount of the gas-flow from the inlet 28 to the outlet 29.

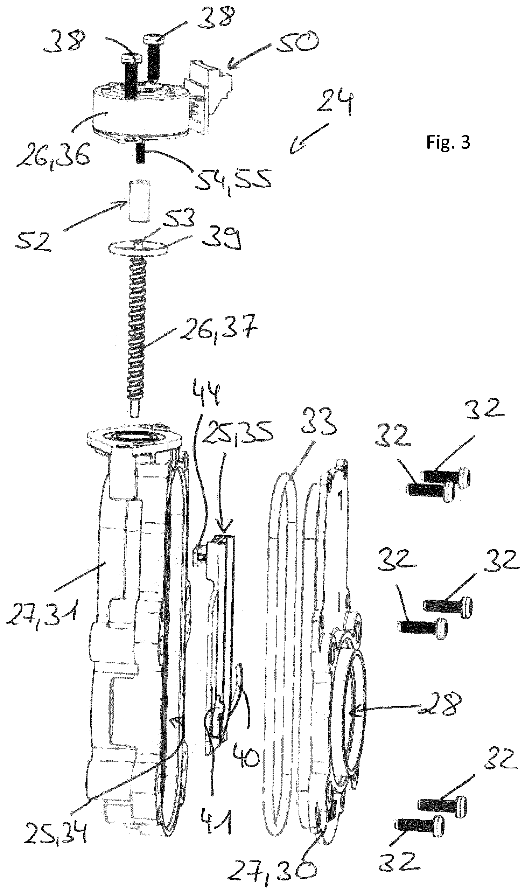

The gas-flow adjustment device 24 further comprises the actuator 26 having a motor 36 and a threaded spindle 37. The threaded spindle 37 is positioned inside the interior space of the housing 27. The motor 36 is mounted to the housing 27, namely to the bottom housing part 31, by screws 38. Figure 3 further shows a jack 50 for connecting the motor 36 of the actuator 26 with the controller 21. A sealing element 39 may be positioned between the motor 36 of the actuator 26 and the bottom housing part 31 of the housing 27.

The motor 36 of the actuator 26 is configured to rotate the threaded spindle 37. The threaded spindle 37 of the actuator 26 is configured to move the moving element 35 of the throttle 25 relative to static element 34 of the throttle 25 in a linear direction X upon rotation of the threaded spindle 37 by the motor 36. The linear movement of the moving element 35 of the throttle 25 relative to static element 34 of the throttle 25 defines the relative position between the moving element 35 of the throttle 25 and the static element 34 of the throttle 25 and thereby the amount of the gas-flow from the inlet 28 to the outlet 29.

The moving element 35 of throttle 25 is made from plastics. The moving element 35 of the throttle 25 and/or the actuator 26 comprise at least one alignment feature being configured to provide an accurate relative position of the moving element 35 of the throttle 25 relative to the static element 34 of the throttle 25. This allows an accurate adjustment of the gas-flow through the gas-flow adjustment device 24 while providing a simple and cost-effective design of the gas-flow adjustment device 24.

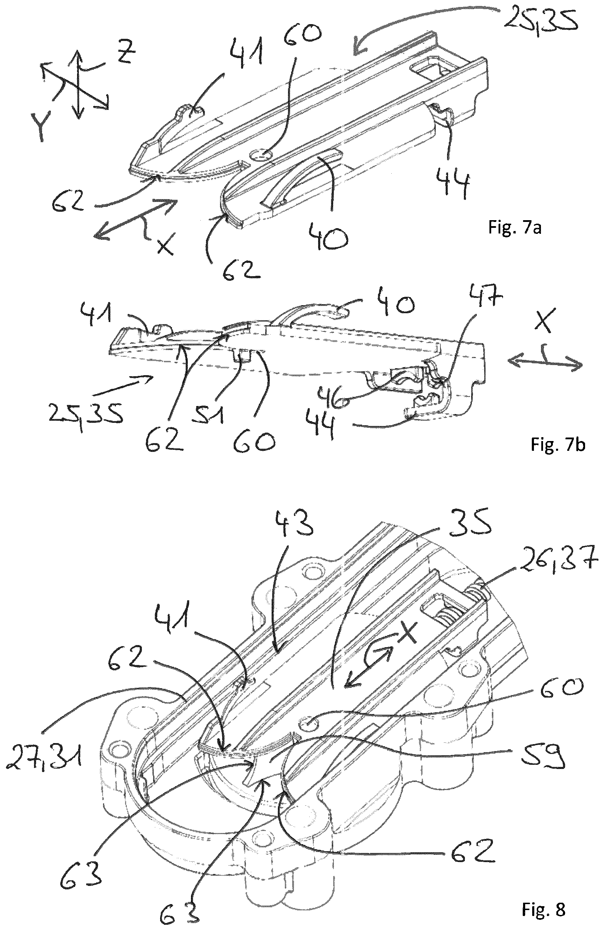

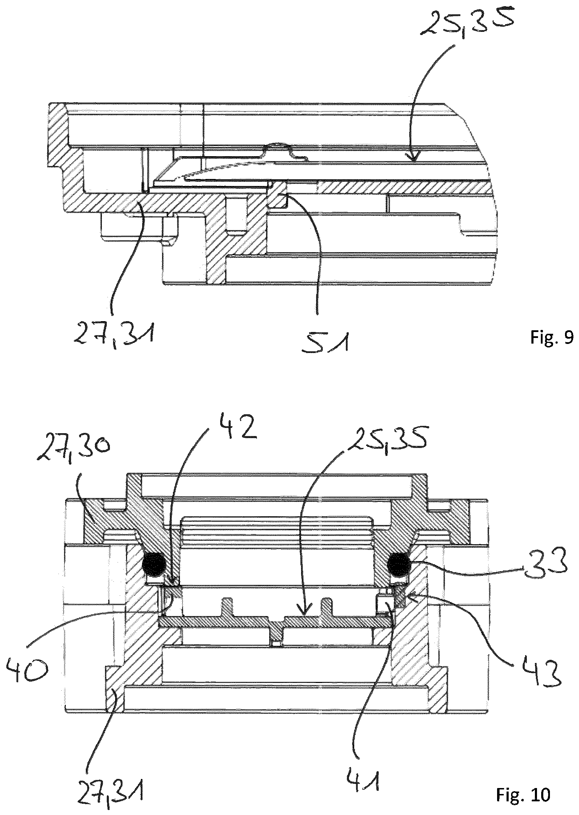

The moving element 35 of the throttle 25 comprises as a first alignment feature 40 a first flexible tongue (see Figures 7a, 7b) being elastically deformable in a first direction Z running perpendicular to the linear moving direction X of the moving element 35. The moving element 35 of the throttle 25 comprises as a second alignment feature 41 a second flexible tongue (see Figures 7a, 7b) being elastically deformable in the first direction Z and in a second direction Y running perpendicular to the first direction Z and to the linear moving direction X of the moving element 35. The first flexible tongue 40 and the second flexible tongue 41 both contact a respective surface 42, 43 (see Figure 10) of the housing 27, namely of the bottom housing part 31 and/or of the top housing part 30, and provide an alignment of the moving element 35 relative to the static element 34 when moving the moving element 35 relative to the static element 34. The first flexible tongue 40 contact a surface 42 of the top housing part 30. The second flexible tongue 41 contact surfaces 43 of the bottom housing part 31. Said surfaces 42, 43 provide sliding surfaces.

The flexible tongues 40, 41 provide a clearance compensation especially for the moving element 35 of the throttle 25 and allow an accurate adjustment of the gas-flow through the gas-flow adjustment device 24. The flexible tongues 40, 41 allow a stable and accurate movement of the moving element 35 relative to the static element 34.

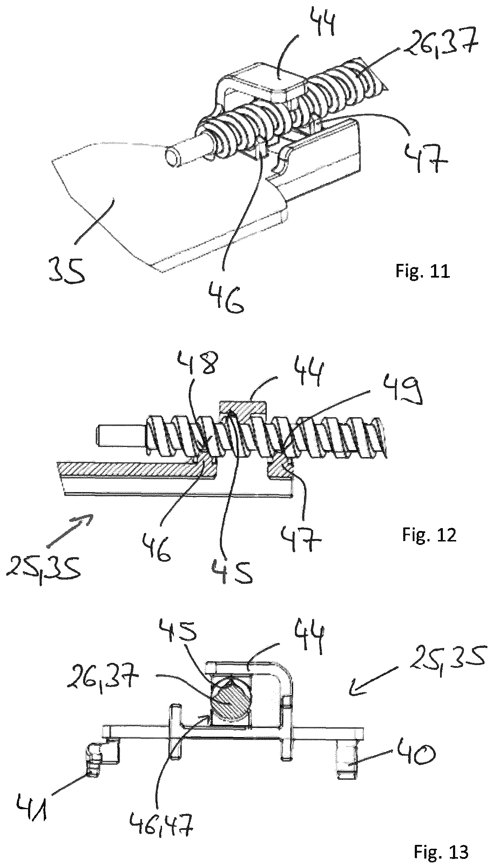

The moving element 35 of the throttle 25 comprises as third alignment feature 44 a flexible protrusion (see Figures 11, 12, 13) with a partial-thread 45. Said flexible protrusion 44 of the moving element 35 is elastically deformable in a direction Z running perpendicular to the linear moving direction X of the moving element 35.

The partial-thread 45 of the flexible protrusion 44 of the moving element 35 engages the threaded spindle 37 and provides an alignment of the moving element 35 relative to the static element 34 when moving the moving element 34 relative to the static element 35.

The moving element 35 of the throttle 25 comprises as fourth and fifth alignment features 46, 47 a first rigid protrusion (see Figures 11, 12, 13) with a partial-thread 48 and a second rigid protrusion with a partial-thread 49. The first and second rigid protrusions 46, 37 of the moving element 35 engage the threaded spindle 37 axially and radially offset from the flexible protrusion 44.

The flexible protrusion 44 and the rigid protrusions 46, 47 provide a clearance and hysteresis compensation and also allow a more accurate adjustment of the gas-flow through the gas-flow through the gas-flow adjustment device 24.

While the tongues 40, 41 of the moving element 35 of the throttle 25 are provided at a side of the moving element 35 facing towards the top housing part 30, the protrusion 44, 46, 47 having the partial-threads 45, 48, 49 are provided at a side of the moving element 35 facing towards the bottom housing part 31.

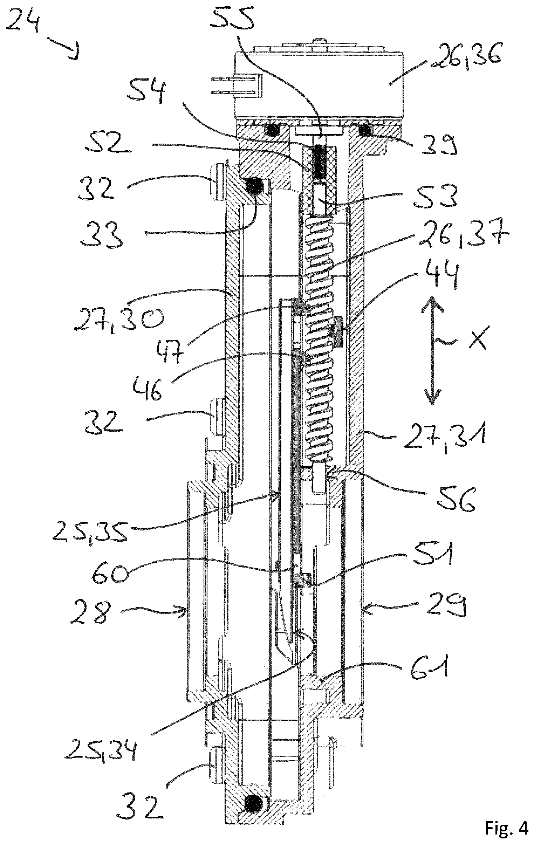

The moving element 35 of the throttle 25 comprises as sixth alignment feature 51 not covered by the present invention a rigid stop member (see Figures 4, 9) providing an alignment of the moving element 35 relative to the static element 34 when the throttle 25 is in a minimum opening position.

The rigid stop member 51 allows a more accurate adjustment of the gas-flow when the throttle 25 and thereby the moving element 35 is its minimum opening position. So, the rigid stop member 51 allows to provide a very accurate minimum amount of a gas-flow through the gas-flow adjustment device 24.

The rigid stop member 51 is positioned at the side of the side of the moving element 35 facing towards the bottom housing part 31.

The moving element 35 of the throttle 25, the first flexible tongue 40 and the second flexible tongue 41, the flexible protrusion 44, first and second rigid protrusion 46, 47 as well as the rigid stop member 51 are all integrally formed providing one monolithic element made from plastics. An accurate adjustment of the gas-flow through the gas-flow adjustment device 24 can be provided while also providing a simple and cost-effective design of the gas-flow adjustment device 24.

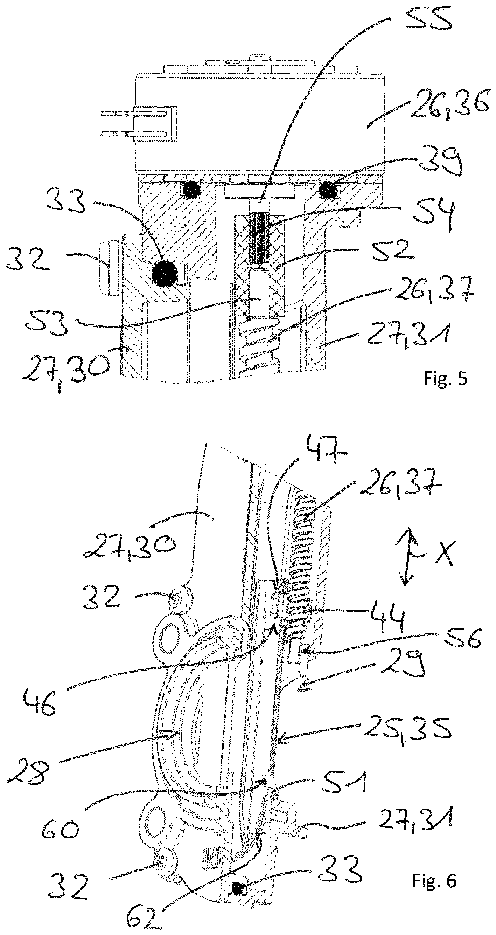

The actuator 26 of the gas-flow adjustment device 24 comprises as seventh alignment feature 52 a flexible joint (see Figures 4, 5), the flexible joint 52 being configured to flexibly couple the threaded spindle 37 at a first end 53 of the same to the motor 36 of the actuator 26. The flexible joint 52 is further configured to provide an alignment of the threaded spindle 37 of the actuator 26 relative to the moving element 35 of the throttle 25 and thereby an accurate linear movement of the moving element 35 of the throttle 25 relative to static element 34 of the throttle 25 upon rotation of the threaded spindle 37 by the motor 36. The flexible joint 52 radially surrounds the first end 53 of the threaded spindle 37 and an adjacent end 54 of a shaft 55 of the motor 36. The flexible joint 52 provides an eccentricity compensation and also allows a more accurate adjustment of the gas-flow through the gas-flow adjustment device 24.

The actuator 26 comprises as eighth alignment feature 56 a rigid bearing element for the threaded spindle 37 (see Figures 4, 5), the rigid bearing element 56 being configured to align the threaded spindle 37 at a second end 57 of the same opposite to the first end 53 of the same at which the flexible joint 52 is positioned. The rigid bearing element 56 also allows a more accurate adjustment of the gas-flow through the gas-flow adjustment device 24.

Figures, 16 and 17 both show alternatives in which an additional ball bearing 58 is provided at the first end 53 of the spindle 37. A ball bearing 58 can provide an eccentricity compensation. Further, the ball bearing 58 improves axial stability.

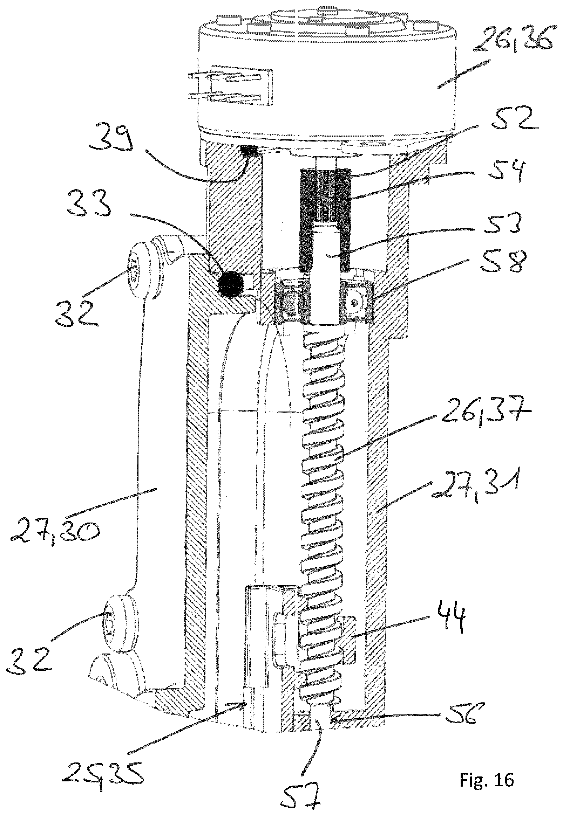

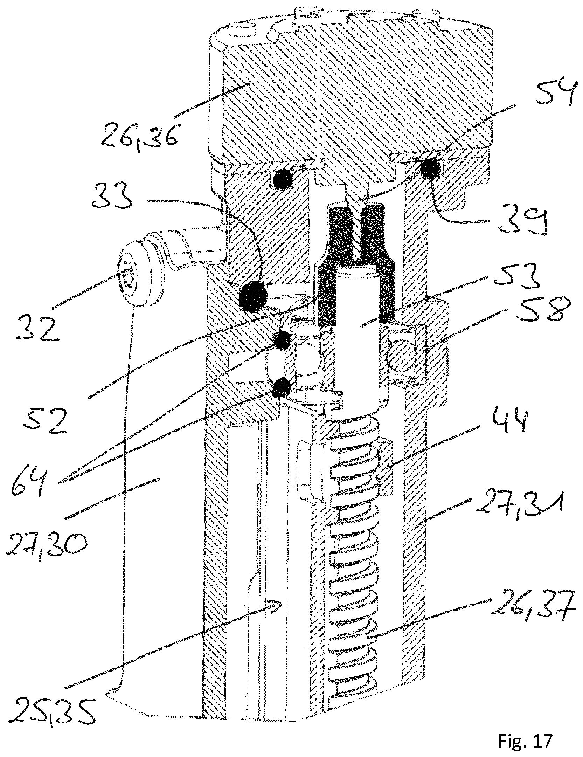

When using such a ball bearing 58 at the first end 53 of the spindle 37, the eighth alignment feature 56 at the second end 57 of the spindle 37 may eventually be omitted. However, in Figure 16 said eighth alignment feature 56 at the second end 57 of the spindle 37 is present. Figures 16 and 17 also make use of the seventh alignment feature 52 provided by the flexible joint. The flexible joints 52 of Figures 16 and 17 have a different shape. The flexible joints 52 may be made from rubber. In Figures 16 and 17, the first end 53 of the spindle 37 may be connected to the adjacent end 54 of the shaft 55 of the motor 36 by a press-fit connection.

In Figure 17, the ball bearing is mounted from the top an additional sealing element 62 is present between the ball bearing 58 and the top housing part 30 of the housing 27. In Figure 16 the ball bearing 58 is mounted from the side of the motor 36.

As discussed above, the relative position of the moving element 35 of the throttle 25 relative to the static element 34 of the throttle 25 defines the amount of the gas-flow from the inlet 28 to the outlet 29 of the gas-flow adjustment device 24.

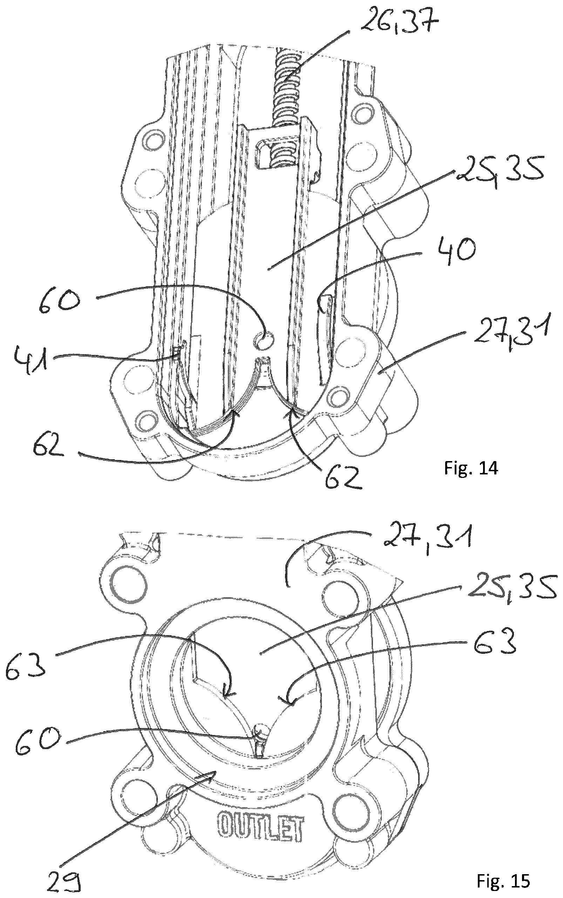

Both, the static element 34 of the throttle 25 and the moving element 35 of the throttle 25 define tother a flow opening 59 for the gas (see Figure 8). In a first relative position of the moving element 35 relative to the static element 34, said flow opening 59 is completely closed or blocked (see Figures 14, 15) by a maximum overlap of the moving element 35 and the static element 34.

In said first relative position a circular opening 60 in the moving element 35 (see Figures 14, 15) defines the minimum amount of the gas-flow through the gas-flow adjustment device 24. In this first relative position the sixth alignment feature 51 of the moving element 35 provided by the rigid stop member abuts at a section 61 of the housing 27, namely of the bottom housing part 31 (see Figure 9).

When moving the moving element 35 relative to the static element 34 starting from said first relative position (see Figures 14, 15), the overlap of the moving element 35 and the static element 34 is reduced (see Figure 8). Thereby the flow opening 59 is becomes opened. With the movement of the moving element 35 relative to the static element 34 the overlap of the moving element 35 and the static element 34 becomes continuously adapted, thereby continuously increasing or decreasing the opening of the flow opening 59 depending on the direction of movement.

Said flow opening 59 is bound by side walls 62 of the moving element 35 and by side walls 63 of the static element 34. Two side walls 62 of the moving element 35 and two side walls 63 of the static element 34 confine said flow opening 59 when the same is at least partially opened. The side walls 62, 63 are arc shaped.

The arc shaped side walls 62, 63 provide a very favorable adjustment of the gas-flow by moving the moving element 35 of the throttle 25 relative to the static element 34 of the throttle 25. When using a stepper motor as motor 36, each actuation step then results into a same percentual change of the gas-flow.

### List of reference signs

- 10: gas burner appliance
- 11: gas burner chamber
- 12: flame
- 13: flame rod
- 14: fan
- 15: air duct
- 16: gas duct
- 17: gas safety valve
- 18: gas control valve
- 19: mixing device
- 20: actuator
- 21: controller
- 22: pneumatic sensor
- 23: pneumatic controller
- 24: gas-flow adjustment device
- 25: throttle
- 26: actuator
- 27: housing
- 28: inlet
- 29: outlet
- 30: top housing part
- 31: bottom housing part
- 32: screw
- 33: sealing element
- 34: static element
- 35: moving element
- 36: motor
- 37: threaded spindle
- 38: screw
- 39: sealing element
- 40: first alignment feature / flexible tongue
- 41: second alignment feature / flexible tongue
- 42: surface
- 43: surface
- 44: third alignment feature / flexible protrusion
- 45: partial-thread
- 46: fourth alignment feature / rigid protrusion
- 47: fifth alignment feature / rigid protrusion
- 48: partial-thread
- 49: partial-thread
- 50: jack
- 51: sixth alignment feature / rigid stop member
- 52: seventh alignment feature / flexible joint
- 53: end
- 54: end
- 55: shaft
- 56: eighth alignment feature / rigid bearing element
- 57: second end
- 58: ball bearing
- 59: flow opening
- 60: circular opening
- 61: section
- 62: side wall
- 63: side wall
- 64: sealing element

## Claims

1. Gas-flow adjustment device (24) for a gas burner appliance, having
a housing (27) providing an inlet (28) for a gas-flow and an outlet (29) for the gas-flow,
a throttle (25) being configured to adjust the amount of the gas-flow from the inlet (28) to the outlet (29),
wherein the throttle (25) has a static element (34) and a moving element (25), the moving element being (35) being configured to move relative to static element (34) in a linear direction,
wherein the relative position of the moving element (35) relative to the static element (34) defines the amount of the gas-flow from the inlet (28) to the outlet (29),
an actuator (26) having a motor (36) and a threaded spindle (37),
wherein the motor (36) is configured to rotate the threaded spindle (37),
wherein the threaded spindle (37) is configured to move the moving element (35) relative to static element (34) in a linear direction upon rotation of the threaded spindle (37) by the motor (36),
wherein the moving element (35) of throttle (25) is made from plastics,
wherein the moving element (35) of the throttle (25) and/or the actuator (26) comprises at least one alignment feature (40, 41, 44, 46, 47, 51, 52) being configured to provide an accurate relative position of the moving element (35) relative to the static element (34), **characterized in that**
the moving element (35) of the throttle (25) comprises as an alignment feature (40) a first flexible tongue being elastically deformable in a first direction (Z) running perpendicular to the linear moving direction (X) of the moving element (35) and as another alignment feature (41) a second flexible tongue being elastically deformable in the first direction (Z) and in a second direction (Y) running perpendicular to the first direction (Z) and to the linear moving direction (X) of the moving element (35), the first flexible tongue (40) and the second flexible tongue (41) being both contact a respective surface (42, 43) of the housing (27) and provide an alignment of the moving element (35) to the static element (34) when moving the moving element (35) relative to the static element (34), and/or **in that**
the moving element (35) of the throttle (25) comprises as alignment feature (44) a flexible protrusion with a partial-thread (45), the flexible protrusion (44) of the moving element (35) being elastically deformable in a direction (Z) running perpendicular to the linear moving di-rection (X) of the moving element (35), and the partial-thread (45) of the flexible protrusion (44) of the moving element (35) engages the threaded spindle (37) and provides an alignment of the moving element (35) to the static element (34) when moving the moving element (35) relative to the static element (34), and/or **in that**
the actuator (26) comprises as alignment feature (52) a flexible joint, the flexible joint (52) being configured to flexibly couple the threaded spindle (37) at a first end (53) of the same to the motor (36), the flexible joint (52) being further configured to provide an alignment of the threaded spindle (37) to the moving element (35) and thereby an accurate linear movement of the moving element (35) relative to static element (34) upon rotation of the threaded spindle (37) by the motor (36).

2. Gas-flow adjustment device of claim 1, **characterized in that**
the moving element (35), the first flexible tongue (40) and the second flexible tongue (41) are integrally formed providing one monolithic element.

3. Gas-flow adjustment device of claim 1 or 2, **characterized in that**
the moving element (35) and the flexible protrusion (44) are integrally formed providing one monolithic element.

4. Gas-flow adjustment device of claim 3, **characterized in that**
the moving element (35) of the throttle (25) comprises as additional alignment features (46, 47) a first rigid protrusion with a partial-thread (48) and a second rigid protrusion with a partial-thread (49),
the first and second rigid protrusions (46, 47) of the moving element (35) engage the threaded spindle (37) axially and radially offset from the flexible protrusion (44).

5. Gas-flow adjustment device of claim 4, **characterized in that**
the moving element (35), the first rigid protrusion (46) and the second rigid protrusion (47) are integrally formed providing one monolithic element.

6. Gas-flow adjustment device of one of claims 1 to 5, **characterized in that**
the actuator (26) comprises as additional alignment feature (56) a rigid bearing element (56) for the threaded spindle (37), the rigid bearing element (56) being configured to align the threaded spindle (37) at a second end (57) of the same opposite to the first end (53) of the same at which the flexible joint (52) is positioned.

7. Gas-flow adjustment device of one of claims 1 to 6, **characterized in that**
the housing (27) comprises a top housing part (30) providing the inlet (28) and a bottom housing part (31) providing the outlet (29),
the static element (34) of the throttle (25) is integrally formed with the bottom housing part (31).

8. Gas burner appliance having a gas-flow adjustment device of one of claims 1 to 7.

## Patentansprüche

1. Gasstromeinstellvorrichtung (24) für ein Gasbrennergerät, mit
einem Gehäuse (27), das einen Einlass (28) für einen Gasstrom und einen Auslass (29) für den Gasstrom bereitstellt,
einer Drossel (25), die dazu ausgelegt ist, die Menge des Gasstroms vom Einlass (28) zum Auslass (29) einzustellen,
wobei die Drossel (25) ein statisches Element (34) und ein bewegliches Element (25) aufweist, wobei das bewegliche Element (35) dazu ausgelegt ist, sich relativ zum statischen Element (34) in einer linearen Richtung zu bewegen,
wobei die relative Position des beweglichen Elements (35) relativ zum statischen Element (34) die Menge des Gasstroms vom Einlass (28) zum Auslass (29) definiert,
einen Aktuator (26) mit einem Motor (36) und einer Gewindespindel (37),
wobei der Motor (36) dazu ausgelegt ist, die Gewindespindel (37) zu drehen,
wobei die Gewindespindel (37) dazu ausgelegt ist, bei Drehung der Gewindespindel (37) durch den Motor (36) das bewegliche Element (35) relativ zum statischen Element (34) in einer linearen Richtung zu bewegen,
wobei das bewegliche Element (35) der Drossel (25) aus Kunststoff hergestellt ist,
wobei das bewegliche Element (35) der Drossel (25) und/oder der Aktuator (26) mindestens ein Ausrichtmerkmal (40, 41, 44, 46, 47, 51, 52) umfasst, das dazu ausgelegt ist, eine genaue relative Position des beweglichen Elements (35) relativ zum statischen Element (34) bereitzustellen,
**dadurch gekennzeichnet, dass**
das bewegliche Element (35) der Drossel (25) als Ausrichtmerkmal (40) eine erste flexible Zunge aufweist, die in einer ersten Richtung (Z), die rechtwinklig zur linearen Bewegungsrichtung (X) des beweglichen Elements (35) verläuft, elastisch verformbar ist, und als weiteres Ausrichtmerkmal (41) eine zweite flexible Zunge aufweist, die in der ersten Richtung (Z) und in einer zweiten Richtung (Y), die rechtwinklig zur ersten Richtung (Z) und zur linearen Bewegungsrichtung (X) des beweglichen Elements (35) verläuft, elastisch verformbar ist, wobei sowohl die erste flexible Zunge (40) als auch die zweite flexible Zunge (41) jeweils eine entsprechende Oberfläche (42, 43) des Gehäuses (27) berühren und eine Ausrichtung des beweglichen Elements (35) zum statischen Element (34) bereitstellen, wenn das bewegliche Element (35) relativ zum statischen Element (34) bewegt wird, und/oder dadurch dass
das bewegliche Element (35) der Drossel (25) als Ausrichtmerkmal (44) einen flexiblen Vorsprung mit einem Teilgewinde (45) aufweist, wobei der flexible Vorsprung (44) des beweglichen Elements (35) in einer Richtung (Z), die rechtwinklig zur linearen Bewegungsrichtung (X) des beweglichen Elements (35) verläuft, elastisch verformbar ist, und das Teilgewinde (45) des flexiblen Vorsprungs (44) des beweglichen Elements (35) in die Gewindespindel (37) eingreift und eine Ausrichtung des beweglichen Elements (35) zum statischen Element (34) bereitstellt, wenn das bewegliche Element (35) relativ zum statischen Element (34) bewegt wird, und/oder dadurch dass
der Aktuator (26) als Ausrichtmerkmal (52) ein flexibles Gelenk aufweist, wobei das flexible Gelenk (52) dazu ausgelegt ist, die Gewindespindel (37) an einem ersten Ende (53) derselben flexibel mit dem Motor (36) zu koppeln, wobei das flexible Gelenk (52) ferner dazu ausgelegt ist, eine Ausrichtung der Gewindespindel (37) zum beweglichen Element (35) und dadurch bei Drehung der Gewindespindel (37) durch den Motor (36) eine genaue lineare Bewegung des beweglichen Elements (35) relativ zum statischen Element (34) bereitzustellen.

2. Gasstromeinstellvorrichtung nach Anspruch 1, **dadurch gekennzeichnet, dass**
das bewegliche Element (35), die erste flexible Zunge (40) und die zweite flexible Zunge (41) einstückig ausgebildet sind und ein monolithisches Element bereitstellen.

3. Gasstromeinstellvorrichtung nach Anspruch 1 oder 2, **dadurch gekennzeichnet, dass**
das bewegliche Element (35) und der flexible Vorsprung (44) einstückig ausgebildet sind und ein monolithisches Element bereitstellen.

4. Gasstromeinstellvorrichtung nach Anspruch 3, **dadurch gekennzeichnet, dass**
das bewegliche Element (35) der Drossel (25) als zusätzliche Ausrichtmerkmale (46, 47) einen ersten starren Vorsprung mit einem Teilgewinde (48) und einen zweiten starren Vorsprung mit einem Teilgewinde (49) aufweist,
wobei der erste und der zweite starre Vorsprung (46, 47) des beweglichen Elements (35) in die Gewindespindel (37) axial und radial versetzt zu dem flexiblen Vorsprung (44) eingreifen.

5. Gasstromeinstellvorrichtung nach Anspruch 4, **dadurch gekennzeichnet, dass**
das bewegliche Element (35), der erste starre Vorsprung (46) und der zweite starre Vorsprung (47) einstückig ausgebildet sind und ein monolithisches Element bereitstellen.

6. Gasstromverstellvorrichtung nach einem der Ansprüche 1 bis 5, **dadurch gekennzeichnet, dass**
der Aktuator (26) als zusätzliches Ausrichtmerkmal (56) ein starres Lagerelement (56) für die Gewindespindel (37) aufweist, wobei das starre Lagerelement (56) dazu ausgelegt ist, die Gewindespindel (37) an einem zweiten Ende (57) derselben, das dem ersten Ende (53) derselben, an dem das flexible Gelenk (52) angeordnet ist, gegenüberliegt, auszurichten.

7. Gasstromverstellvorrichtung nach einem der Ansprüche 1 bis 6, **dadurch gekennzeichnet, dass**
das Gehäuse (27) ein oberes Gehäuseteil (30), das den Einlass (28) bereitstellt, und ein unteres Gehäuseteil (31), das den Auslass (29) bereitstellt, umfasst,
das statische Element (34) der Drossel (25) einstückig mit dem unteren Gehäuseteil (31) ausgebildet ist.

8. Gasbrennergerät mit einer Gasstromeinstellvorrichtung nach einem der Ansprüche 1 bis 7.

## Revendications

1. Dispositif de réglage de débit de gaz (24) pour un appareil à brûleur à gaz, ayant
un corps (27) définissant une entrée (28) pour un flux de gaz et une sortie (29) pour le flux de gaz,
un organe d'étranglement (25) étant configuré pour régler la quantité de gaz s'écoulant de l'entrée (28) à la sortie (29),
l'organe d'étranglement (25) comportant un élément statique (34) et un élément mobile (25), l'élément mobile (35) étant configuré pour se déplacer par rapport à l'élément statique (34) dans une direction linéaire,
la position relative de l'élément mobile (35) par rapport à l'élément statique (34) définissant la quantité de gaz s'écoulant de l'entrée (28) à la sortie (29),
un actionneur (26) comportant un moteur (36) et une tige filetée (37),
le moteur (36) étant configuré pour faire tourner la tige filetée (37),
la tige filetée (37) étant configurée pour déplacer l'élément mobile (35) par rapport à l'élément statique (34) dans une direction linéaire lors de la mise en rotation de la tige filetée (37) par le moteur (36),
l'élément mobile (35) de l'organe d'étranglement (25) étant en matière plastique,
l'élément mobile (35) de l'organe d'étranglement (25) et/ou l'actionneur (26) comprenant au moins un élément d'alignement (40, 41, 44, 46, 47, 51, 52) étant configuré pour établir une position relative précise de l'élément mobile (35) par rapport à l'élément statique (34), **caractérisé en ce que**
l'élément mobile (35) de l'organe d'étranglement (25) comprend, comme élément d'alignement (40), une première languette flexible déformable élastiquement dans une première direction (Z) perpendiculaire à la direction de déplacement linéaire (X) de l'élément mobile (35) et, comme autre élément d'alignement (41), une seconde languette flexible déformable élastiquement dans la première direction (Z) et dans une seconde direction (Y) perpendiculaire à la première direction (Z) et à la direction de déplacement linéaire (X) de l'élément mobile (35), la première languette flexible (40) et la seconde languette flexible (41) étant toutes deux en contact avec une surface respective (42, 43) du corps (27) et assurant un alignement de l'élément mobile (35) par rapport à l'élément statique (34) lors du déplacement de l'élément mobile (35) par rapport à l'élément statique (34), et/ou **en ce que**
l'élément mobile (35) de l'organe d'étranglement (25) comprend, comme élément d'alignement (44), une saillie flexible avec un filetage partiel (45), la saillie flexible (44) de l'élément mobile (35) étant élastiquement déformable dans une direction (Z) perpendiculaire à la direction de déplacement linéaire (X) de l'élément mobile (35), et le filetage partiel (45) de la saillie flexible (44) de l'élément mobile (35) entre en prise avec la tige filetée (37) et assure un alignement de l'élément mobile (35) par rapport à l'élément statique (34) lors du déplacement de l'élément mobile (35) par rapport à l'élément statique (34), et/ou **en ce que**
l'actionneur (26) comprend, comme élément d'alignement (52), un raccord flexible, le raccord flexible (52) étant configuré pour accoupler de manière flexible la tige filetée (37) au niveau d'une première extrémité (53) de celle-ci au moteur (36), le raccord flexible (52) étant en outre configuré pour assurer un alignement de la tige filetée (37) sur l'élément mobile (35) et ainsi un mouvement linéaire précis de l'élément mobile (35) par rapport à l'élément statique (34) lors de la mise en rotation de la tige filetée (37) par le moteur (36).

2. Dispositif de réglage de débit de gaz selon la revendication 1, **caractérisé en ce que**
l'élément mobile (35), la première languette flexible (40) et la seconde languette flexible (41) sont formés d'un seul tenant de sorte qu'ils constituent un élément monolithique.

3. Dispositif de réglage de débit de gaz selon la revendication 1 ou 2, **caractérisé en ce que**
l'élément mobile (35) et la saillie flexible (44) sont formés d'un seul tenant de sorte qu'ils constituent un élément monolithique.

4. Dispositif de réglage de débit de gaz selon la revendication 3, **caractérisé en ce que**
l'élément mobile (35) de l'organe d'étranglement (25) comprend, comme éléments d'alignement supplémentaires (46, 47), une première saillie rigide avec un filetage partiel (48) et une seconde saillie rigide avec un filetage partiel (49),
les première et seconde saillies rigides (46, 47) de l'élément mobile (35) entrent en prise avec la tige filetée (37) en décalage axial et radial par rapport à la saillie flexible (44).

5. Dispositif de réglage de débit de gaz selon la revendication 4, **caractérisé en ce que**
l'élément mobile (35), la première saillie rigide (46) et la seconde saillie rigide (47) sont formés d'un seul tenant de sorte qu'ils constituent un élément monolithique.

6. Dispositif de réglage de débit de gaz selon l'une des revendications 1 à 5, **caractérisé en ce que**
l'actionneur (26) comprend, comme élément d'alignement supplémentaire (56), un élément formant palier rigide (56) pour la tige filetée (37), l'élément formant palier rigide (56) étant configuré pour aligner la tige filetée (37) au niveau d'une seconde extrémité (57) de celle-ci opposée à la première extrémité (53) de celle-ci au niveau de laquelle le raccord flexible (52) est positionné.

7. Dispositif de réglage de débit de gaz selon l'une des revendications 1 à 6, **caractérisé en ce que**
le corps (27) comprend une partie supérieure de corps (30) formant l'entrée (28) et une partie inférieure de corps (31) formant la sortie (29),
l'élément statique (34) de l'organe d'étranglement (25) est formé d'un seul tenant avec la partie inférieure de corps (31).

8. Appareil à brûleur à gaz comportant un dispositif de réglage de débit de gaz selon l'une des revendications 1 à 7.
